## Europäisches Patentamt
## European Patent Office
## Office européen des brevets

(19)

(11) Numéro de publication: **0 211 108**
**B1**

(12)

# FASCICULE DE BREVET EUROPEEN

(45) Date de publication du fascicule du brevet:
11.04.90

(51) Int. Cl.⁴: **G21C 13/02, F16L 3/01**

(21) Numéro de dépôt: **85201256.6**

(22) Date de dépôt: **31.07.85**

---

(54) **Porte-câbles escamotable.**

---

(43) Date de publication de la demande:
**25.02.87 Bulletin 87/9**

(45) Mention de la délivrance du brevet:
**11.04.90 Bulletin 90/15**

(84) Etats contractants désignés:
**AT BE CH DE FR GB IT LI LU NL SE**

(56) Documents cités:
**FR-A- 954 808**
**FR-A- 2 098 239**
**GB-A- 2 104 861**
**US-A- 3 243 764**

(73) Titulaire: **ACEC ENERGIE S.A., Rue Chapelle Beaussart 80, B-6030 Charleroi(BE)**

(72) Inventeur: **Fabris, Mirko, 5, Rue de l'Argayon, B-1400 Nivelles(BE)**

(74) Mandataire: **Bosch, Henry et al, Office VAN MALDEREN Boulevard de la Sauvenière, 85/042, B-4000 Liège(BE)**

---

ACTORUM AG

## Description

La présente invention se rapporte à un porte-câbles utilisé au-dessus d'une cuve de réacteur nucléaire pour supporter la botte de câbles alimentant en énergie électrique les mécanismes d'actionnement des barres de contrôle et des indicateurs de position. Ce porte-câbles doit être conçu de manière à permettre l'inspection des têtes des mécanismes d'actionnement ou le passage d'outillages spéciaux.

Dans les centrales nucléaires, la cuve du réacteur est fermée par un couvercle surmonté de mécanismes d'actionnement des barres de contrôle, eux-mêmes protégés dans leur partie supérieure par un anneau antisismique. Des tirants verticaux relient l'anneau antisismique au couvercle de la cuve du réacteur, des tirants horizontaux le positionnent par rapport aux murs de l'enceinte. L'ensemble est recouvert par un blindage constitué de plusieurs dalles en béton pour éviter qu'en cas d'avarie survenant par exemple aux soudures d'un mécanisme d'actionnement des barres de contrôle, celui-ci, transformé en projectile sous la pression interne de la cuve, ne perce l'enceinte du réacteur. A la face inférieure de l'une de ces dalles est accrochée une passerelle servant de porte-câbles pour soutenir les câbles, alimentant les mécanismes d'actionnement des barres de contrôle et les indicateurs de position, entre la cuve du réacteur et la margelle de l'enceinte du réacteur. Cette passerelle est constituée d'une partie fixe accrochée à une dalle du blindage et une partie mobile, articulée à la manière d'un pont levis, qui s'abaisse sur une borne d'accrochage disposée sur la margelle de l'enceinte du réacteur. Les extrémités de chaque câble sont munies de connecteurs à broches car lors du rechargement annuel du réacteur, l'accrochage de la passerelle porte-câbles à une dalle du blindage oblige à déconnecter les câbles à leurs deux extrémités avant de procéder à l'enlèvement de cette dalle.

Par ailleurs, la plupart des centrales nucléaires sont maintenant équipées d'un outillage spécial permettant d'enlever, en une seule opération, l'ensemble des goujons qui retiennent le couvercle sur la cuve du réacteur. Il est donc nécessaire que l'accès de cet outillage spécial au couvercle ne soit pas empêché ou retardé par la présence d'obstacles le long de son parcours.

Enfin, lors du rechargement annuel de la cuve du réacteur, le personnel d'entretien doit pouvoir procéder à une inspection systématique des têtes des mécanismes d'actionnement des barres de contrôle et des indicateurs de position sans être gêné par leurs câbles d'alimentation ou les superstructures de l'installation.

Pour déconnecter plus facilement les câbles, chacun d'eux est muni d'un premier connecteur à broches qui le relie à un mécanisme d'actionnement ou à un indicateur de position, cette connexion étant appelée par la suite une connexion " côté cuve ", et d'un second connecteur à broches qui relie le câble à une source d'alimentation, cette connexion étant appelée ultérieurement, une connexion " côté alimentation ". Mais ces connecteurs à broches sont souvent l'origine d'avaries sérieuses suite à une dégradation progressive qui aboutit à une véritable dislocation des broches. Ces avaries étant à l'origine de pertes dommageables d'exploitation.

L'invention revendiquée a pour but de supprimer les connecteurs à broches " côté cuve " sans contrarier l'inspection des têtes des mécanismes ou l'accès de l'outillage spécial utilisé pour l'enlèvement des goujons du couvercle de la cuve.

L'invention, telle qu'elle est caractérisée dans les revendications, résout le problème par un porte-câbles escamotable, monté directement sur l'anneau antisismique. En position déployée, le porte-câbles escamotable assure le soutien des câbles jusqu'aux murs de l'enceinte, et permet l'inspection des têtes des mécanismes d'actionnement. En position repliée, il s'insère dans le gabarit adapté de l'anneau antisismique pour permettre le passage de l'outillage spécial.

Les avantages obtenus grâce à cette invention consistent essentiellement en ce que les avaries de connexion " côté cuve " sont supprimées puisque ce porte-câbles escamotable permet le remplacement du connecteur débrochable par un boîtier de connexions boulonnées.

L'invention est exposée ci-après en détails à l'aide des dessins représentant un mode d'exécution.

La figure 1 représente une vue d'ensemble de la disposition utilisant une passerelle comme porte-câbles.

La figure 2 montre une vue en élévation du porte-câbles escamotable et d'un tripode installé lors de l'opération de rechargement.

La figure 3 est une vue en plan du porte-câbles escamotable.

La figure 4 représente le système d'accrochage du porte-câbles escamotable.

La figure 5 montre un boîtier de connexions boulonnées pour un câble de puissance.

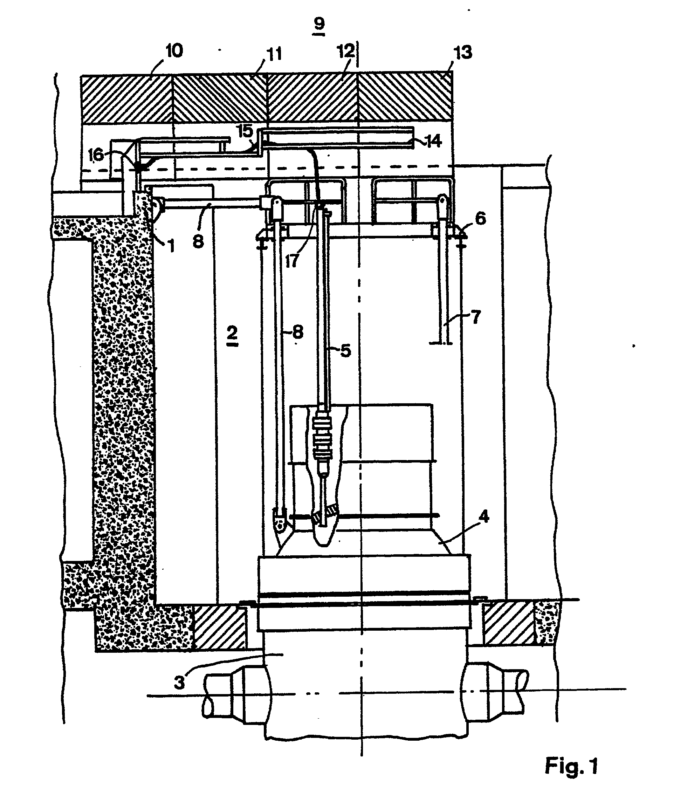

La figure 1 représente une vue en élévation de la partie supérieure du réacteur. Un mur 1 forme la margelle d'une enceinte 2 abritant une cuve 3 d'un réacteur, fermée à sa partie supérieure par un couvercle 4 surmonté de mécanismes d'actionnement des barres de contrôle et d'indicateurs de position. Un de ces mécanismes d'actionnement est représenté en 5 ; les indicateurs de position ne sont pas représentés. La partie supérieure de chacun de ces mécanismes d'actionnement est préservée contre des débattements excessifs, en cas de séisme, par un anneau antisismique 6 relié au couvercle 4 par des tirants verticaux 7 et aux murs de l'enceinte 2 par des tirants horizontaux. Un tirant horizontal 8 reliant l'anneau antisismique 6 au mur 1 est représenté en figure 1.

L'enceinte 2 est surmontée d'un blindage 9 formé de plusieurs dalles 10,11,12,13... Sur la face inférieure de la dalle 12 est accrochée une passerelle 14 d'une largeur égale au diamètre de la cuve 3 et servant de porte-câbles à des câbles d'alimentation étalés en nappes sur la passerelle 14. Ces câbles pendent depuis la passerelle jusqu'aux mécanismes d'actionnement et indicateurs de position qu'ils alimentent. Chaque câble 15 est muni à ses deux extrémités d'un connecteur 16 disposé côté " alimentation " et d'un connecteur 17 disposé côté " cuve ".

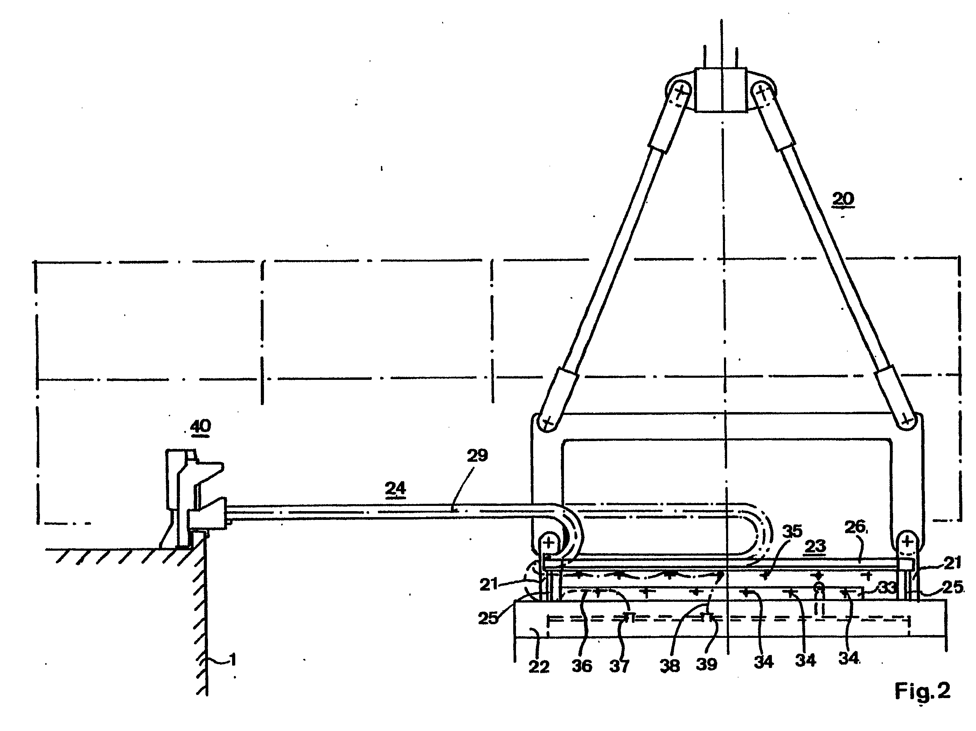

La figure 2 montre la partie supérieure du réacteur après l'enlèvement du blindage. Un tripode 20 est accroché à des étriers 21 d'un anneau antisismique 22 dont le diamètre s'inscrit dans un gabarit acceptant le passage d'un outillage spécial qui permet de démonter, en une seule opération, l'ensemble des goujons retenant le couvercle 4 montré en figure 1, sur la cuve 3.

Un support 23 soutient un porte-câbles escamotable 24 au-dessus de l'anneau antisismique 22.

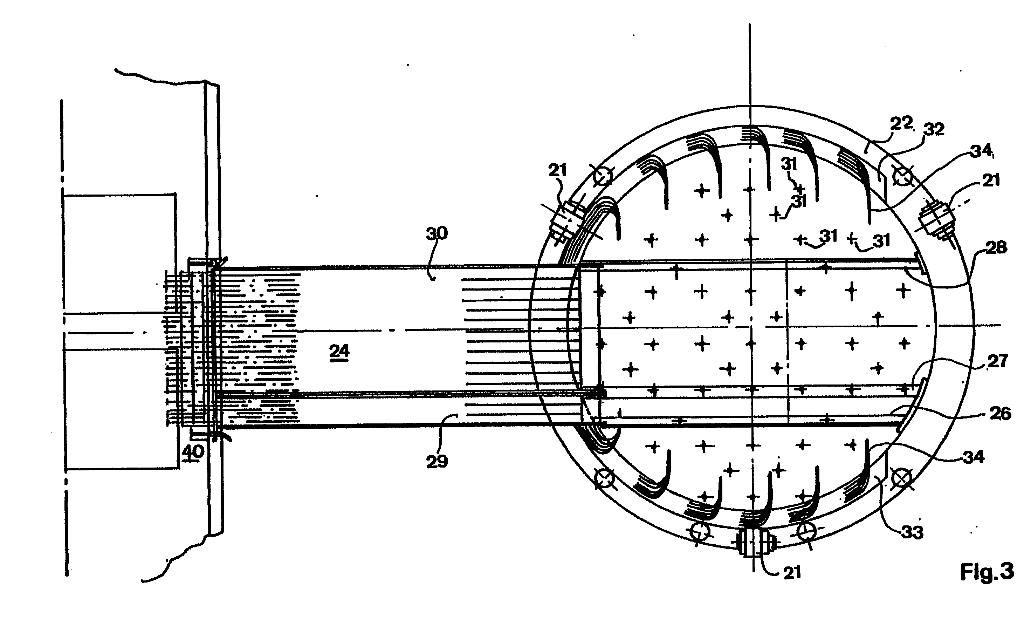

Ce support 23 est constitué de pattes 25 prenant appui sur la face intérieure de l'anneau antisismique 22 et soutenant des rails 26, 27,28 visibles tous trois sur la figure 3. Les rails 26 et 28 servent à la fois à guider et à supporter le porte-câbles escamotable 24 alors que le rail 27 sert uniquement de support à l'endroit de la jonction entre une chaîne 29 et une chaîne 30 formant le porte-câbles escamotable 24.

Le porte-câbles escamotable 24 est, dans l'exemple de réalisation exposé aux figures 2 et 3, constitué des chaînes 29 et 30 disposées côte-à-côte et solidarisées entre elles pour ne former qu'une seule unité. Chaque chaîne, 29 ou 30, est autoporteuse, elle est formée de deux bandes articulées parallèles, reliées entre elles, à des espaces réguliers, par des entretoises, non représentées, entre lesquelles les câbles sont guidés et maintenus. Les maillons de chaque bande peuvent s'articuler entre eux de façon réglable à l'aide de butées dont la position permet de réaliser des rayons de courbure différents. La longueur de chaque bande peut être modifiée par l'adjonction ou la suppression de maillons.

Dans l'exemple de la figure 2, les maillons de chaque bande peuvent se disposer dans le prolongement d'un de l'autre pour obtenir la position déployée du porte-câbles escamotable 24. Les maillons peuvent également pivoter l'un par rapport à l'autre en respectant un rayon de courbure choisi pour obtenir la position repliée du porte-câbles escamotable 24, figurée en traits interrompus.

Le chaîne 30 sert au support des câbles de puissance alimentant les mécanismes d'actionnement dont les positions sont représentées en figure 3 par des traits d'axes; l'un des mécanisme d'actionnement est repéré en 31.

La chaîne 29 sert au support des câbles alimentant les indicateurs de position, non représentés.

Au sortir du porte-câbles escamotable 24, les câbles de puissance, alimentant les mécanismes d'actionnement, s'engagent dans les goulottes 32 et 33, pour en sortir, selon le mécanisme d'actionnement à alimenter, suivant un câble tendeur appartenant à un réseau de câbles tendeurs 34 disposé à une certaine distance au-dessus des têtes de mécanisme. Les câbles alimentant les indicateurs de position sont, au sortir du porte-câbles escamotable 24, conduits jusqu'à destination en s'accrochant à un autre réseau de câbles tendeurs 35 disposés parallèlement et à un niveau supérieur à celui soutenant les câbles de puissance.

La figure 2 montre, en traits d'axes, un câble de puissance 36, alimentant une tête 37 d'un mécanisme d'actionnement, et un câble 38 alimentant une tête 39 d'un indicateur de position.

Une extrémité du porte-câbles escamotable 24 est fixe et solidarisée aux rails 26,27,28, l'autre extrémité est mobile et se verrouille, en position déployée, à une borne d'accrochage 40.

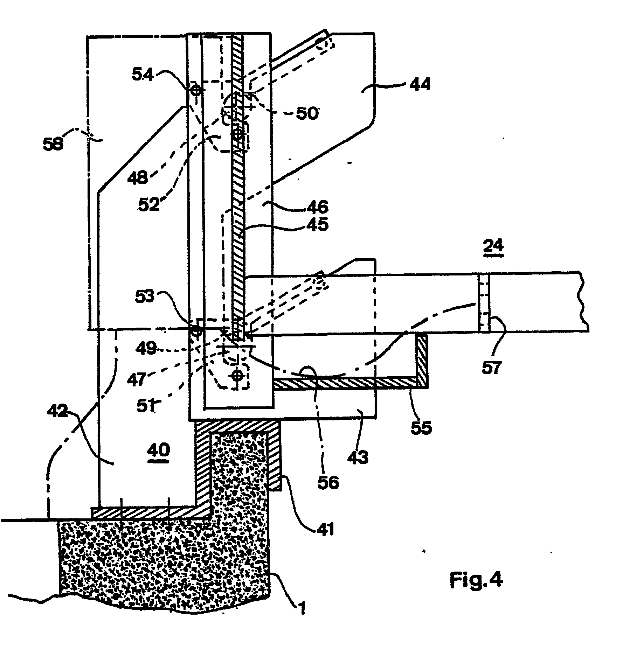

La figure 4 montre la borne d'accrochage 40 qui est formée d'une plaque d'assise 41, d'une largeur quelque peu supérieure à celle du porte-câbles escamotable 24, prenant appui sur la partie supérieure du mur 1.

Sur cette plaque d'assise 41, deux contreforts 42, fixés aux environs des extrémités, soutiennent deux rampes de double accrochage 43 et 44. Chaque rampe de double accrochage s'évase vers l'extérieur et est profilée pour favoriser le guidage et l'accrochage du porte-câbles escamotable 24 dont l'extrémité présente une plaque frontale soutenue à ses deux extrémités par deux méplats latéraux 46 portant chacun deux ergots d'accrochage 47 et 48 qui s'insèrent dans des encoches 49 et 50 de la rampe de double accrochage 43 et 44. Les ergots d'accrochage 47 et 48 sont verrouillés par les verrous 51 et 52 maintenus en position verrouillée à l'aide des broches 53 et 54.

Le porte-câbles escamotable 24 présente encore à son extrémité, un support 55 s'étalant en contrebas sur toute la largeur du porte-câbles escamotable 24 et prenant appui sur les deux méplats 46 pour soutenir l'extrémité des câbles.

Un câble 56, représenté en traits d'axes, quitte le porte-câbles escamotable 24, au niveau d'une entretoise 57 et est soutenu par le support 55 avant d'être raccordé à un bornier 58 disposé entre les deux contreforts 42 et les deux rampes de double accrochage 43 et 44.

Dans une variante de réalisation, le bornier 58 est attenant au porte-câbles escamotable 24 par solidarisation aux deux méplats latéraux 46 et à la plaque frontale 45 au lieu d'être fixé aux deux contreforts 42.

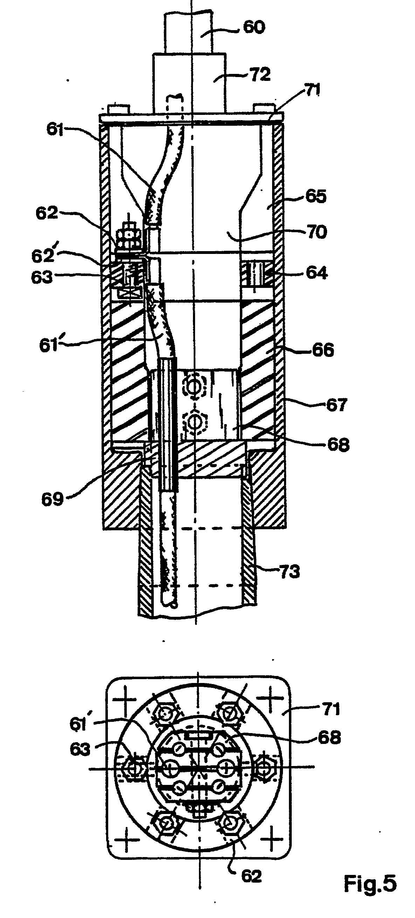

La figure 5 représente un boîtier de connexions boulonnées servant au raccordement des câbles de puissance aux mécanismes d'actionnement.

Un câble de puissance 60 est formé de six conducteurs 61 portant chacun un soulier de câble 62 dont l'extrémité, perpendiculaire à l'axe du conducteur permet un raccordement, à un autre soulier de câble 62' d'un conducteur 61' du mécanisme d'actionnement, à l'aide d'un boulon 63 maintenu dans un bornier 64 en forme de couronne. Un intercalaire supérieur 65 et un intercalaire inférieur 66 maintiennent la couronne 64 au niveau désiré à l'intérieur d'un boîtier 67 de forme carrée dont le fond percé permet le passage d'un bloc entretoise 68 maintenu en place par une bague de calage 69. Le boîtier 67 rempli d'un mélange diélectrique 70 est fermé à sa partie supérieure par un couvercle 71 portant un presse-étoupe 72. Le bloc entretoise 68 sert à disposer correctement les différents conducteurs 61'
à l'intérieur d'un tube 73 de la tête d'un mécanisme
de commande.

Une disposition équivalente est adoptée pour la
réalisation des boîtiers de connexions boulonnées
destinés aux câbles alimentant les indicateurs de position.

Le bornier 64 connu en soi relie par connexions
boulonnées l'autre extrémité des câbles de puissance et des câbles alimentant les indicateurs de position à leurs sources d'alimentation.

## Revendications

1. Porte-câbles escamotable, situé sous le blindage (9) d'un réacteur nucléaire, pour supporter les
câbles, alimentant les mécanismes d'actionnement
(5) des barres de contrôle et les indicateurs de position disposés au-dessus du couvercle (4) de la cuve (3) du réacteur nucléaire et protégés par un anneau antisismique (6), entre le couvercle (4) de la
cuve (3) du réacteur et une borne d'accrochage
(40) fixée au mur (1) de l'enceinte (2) du réacteur;
chaque câble (15) ayant deux connexions (16, 17):
une première connexion qui relie le câble à un mécanisme d'actionnement ou à un indicateur de position,
cette connexion étant appelée par la suite une connexion "côté cuve" (17) et une seconde connexion
qui relie le câble à une source d'énergie, connexion
appelée par la suite une connexion "côté alimentation" (16) caractérisé en ce qu'un dispositif escamotable (24) monté sur l'anneau antisismique (6) constitué de deux chaînes (29, 30) solidarisées entre elles
et formée chacune de deux bandes articulées, parallèles, reliées entre elles par des entretoises (57)
servant au maintien et au guidage des câbles, prenant partiellement ou totalement appui, en position
repliée, sur des rails (26, 27, 28) solidarisés à l'anneau antisismique (6) supporte lesdits câbles entre
le couvercle (4) de la cuve (3) du réacteur nucléaire et ladite borne d'accrochage (40) en position déployée et s'inscrit dans un gabarit permettant à des
outillages spéciaux d'accéder commodément au couvercle (4) de la cuve (3), en position repliée.

2. Porte-câbles escamotable selon la revendication 1, caractérisé en ce qu'il est fixé à une extrémité
sur lesdits rails (26, 27, 28) et est porteur à l'autre
extrémité d'une plaque frontale (45) et de deux méplats latéraux (46) équipés d'ergots d'accrochage
(47, 48) pour s'insérer dans des encoches (49, 50)
faites dans des rampes d'accrochage (43, 44) de la
borne d'accrochage (40) et être verrouillées en position d'accrochage à l'aide de verrous (51, 52) et de
broches (53, 54).

3. Porte-câbles escamotable selon la revendication 1, caractérisé en ce que les connexions boulonnées (62, 62', 63) "côté cuve" sont disposées en
couronne sur un bornier (64) maintenu à l'intérieur
d'un boîtier (67) à l'aide d'intercalaires (65, 66) dont
l'un d'eux (66) centre un bloc entretoise (68) servant au positionnement des conducteurs à l'intérieur d'un tube (73) de la tête d'un mécanisme d'actionnement.

## Claims

1. Retractable cable carrier, situated beneath the
shielding (9) of a nuclear reactor, to support the cables supplying the actuating mechanisms (5) of the
control rods and the position indicators disposed
above the cover (4) of the vessel (3) of the nuclear
reactor and protected by an anti-seismic ring (6),
between the cover (4) of the vessel (3) of the reactor and an attachment post (40) fixed to the wall (1)
of the containment (2) of the reactor; each cable
(15) having two connections (16, 17): a first connection which connects the cable to an actuating mechanism or to a position indicator, this connection being
referred to hereinbelow as a "vessel side "connection (17) and a second connection which connects
the cable to an energy source, this connection being referred to hereinbelow as a "supply side" connection (16), characterized in that a retractable device (24), mounted on the anti-seismic ring (6) composed of two chains (29, 30) made solid with one
another and each formed of two articulated, parallel
bands connected to one another by struts (57)
serving for the retention and for the guidance of
the cables, being partially or wholly supported, in
the folded-back position, on rails (26, 27, 28) made
solid with the anti-seismic ring (6), supports the said
cables between the cover (4) of the vessel (3) of
the nuclear reactor and the said attachment post
(40) in the unfolded position and is drawn into a jig
permitting special toolings to have easy access to
the cover (4) of the vessel (3), in the folded-back
position.

2. Retractable cable carrier according to Claim 1,
characterized in that it is fixed at one end on the
said rails (26, 27, 28) and bears at the other end a
front plate (45) and two lateral flats (46) equipped
with attachment lugs (47, 48) to be inserted into
notches (49, 50) made in attachment ramps (43, 44)
of the attachment post (40) and to be locked in the
attachment position by means of bars (51, 52) and of
pins (53, 54).

3. Retractable cable carrier according to Claim 1,
characterized in that the "vessel side" bolted connections (62, 62, 63) are disposed in a crown on a
post support (64) retained within a casing (67) by
means of spacers (65, 66), one (66) of which centres a spacer block (68) serving for the positioning
of the conductors within a tube (73) of the head of
an actuating mechanism.

## Patentansprüche

1. Einziehbarer Kabelhalter, der unter der Abschirmung (9) eines Kernreaktors angeordnet ist
und dazu bestimmt ist, die Kabel, die die Betätigungsmechanismen (5) der Steuerstäbe und die
über dem Deckel (4) des Kernreaktor-Behälters (3)
angeordneten und durch einen Erdbebenschutzring
(6) geschützten Positionsindikatoren mit Strom versorgen, zwischen dem Deckel (4) des Reaktorbehälters (3) und einer an der Wand (1) der Reaktorhülle
(2) angebrachten Befestigungsklemme (40) zu tragen, wobei jedes Kabel (15) zwei Anschlüsse (16, 17)
aufweist: einen ersten Anschluß, der das Kabel mit einem Betätigungsmechanismus oder einem Positionsindikator verbindet, und der nachstehend "behälterseitiger" Anschluß (17) genannt wird, und einen zweiten Anschluß, der das Kabel mit einer Energiequelle verbindet und nachstehend "versorgungsseitiger" Anschluß (16) genannt wird, dadurch gekennzeichnet, daß eine auf dem Erdbebenschutzring (6) angebrachte einziehbare Vorrichtung (24), die aus zwei miteinander verbundenen Ketten (29, 30) besteht - von denen jede von zwei parallelen Gelenkbändern gebildet wird, die durch Abstandsstücke (57) miteinander verbunden sind, die zum Halten und Führen der Kabel dienen, wobei die Kabel in der eingezogenen Position teilweise oder vollständig auf Schienen (26, 27, 28) aufliegen, die mit dem Erdbebenschutzring (6) fest verbunden sind - in der ausgezogenen Position die besagten Kabel zwischen dem Deckel (4) des Kernreaktorbehälters (3) und der besagten Befestigungsklemme (40) trägt, und in der eingezogenen Position innerhalb einer solchen Begrenzung liegt, daß Spezialwerkzeuge an den Deckel (4) des Behälters (3) leicht herangebracht werden können.

2. Einziehbarer Kabelhalter gemäß Anspruch 1, dadurch gekennzeichnet, daß er an einem Ende auf den besagten Schienen (26, 27, 28) befestigt ist, und an dem anderen Ende versehen ist mit einer vorderen Platte (45) und seitlichen halbflachen Platten (46), die mit Befestigungsbolzen (47, 48) versehen sind, die in Kerben (49, 50) eingeschoben werden, die in Befestigungsrampen (43, 44) der Befestigungsklemme (40) angebracht sind, und in der eingeschobenen Position mit Hilfe von Riegeln (51, 52) und Dornen (53, 54) blockiert werden.

3. Einziehbarer Kabelhalter gemäß Anspruch 1, dadurch gekennzeichnet, daß die "behälterseitigen" Schraubverbindungen (62, 62', 63) kranzförmig angeordnet sind auf einer Klemmenplatte (64), die innerhalb eines Gehäuses (67) mit Hilfe von Zwischenstücken (65, 66) festgehalten wird, von denen eines (66) einen Abstandsblock (68) zentriert, der zur Positionierung der Leiter innerhalb eines Rohrs (73) des Kopfes eines Betätigungsmechanismus dient.

Fig. 1

Fig.2

EP 0 211 108 B1

Fig.3

Fig.4

Fig.5